# EUROPÄISCHE PATENTSCHRIFT

(11) **EP 3 500 638 B1**
(45) Veröffentlichungstag und Bekanntmachung des Hinweises auf die Patenterteilung: **16.11.2022**
(21) Anmeldenummer: 17751424.7
(22) Anmeldetag: 16.08.2017
(51) Int. Cl.: C09D 183/06, C09J 183/06, C08L 83/06

(54) **SILICONMISCHUNGEN MIT VERBESSERTER WEITERREISSFESTIGKEIT**
SILICONE MIXTURES WITH IMPROVED RESISTANCE TO FURTHER TEARING
MELANGES DE SILICONE PRESENTANT UNE RESISTANCE A LA DECHIRURE AMELIOREE

(30) Priorität: 18.08.2016 EP 16184716
(43) Veröffentlichungstag der Anmeldung: 26.06.2019
(73) Patentinhaber: Sika Technology AG, 6340 Baar (CH)
(72) Erfinder: SAVOY, André, 8964 Rudolfstetten (CH); FRIEDEL, Manuel, 8048 Zürich (CH); MÜLLER, Andrea, 6504 Hendschiken (CH)
(74) Vertreter: Sika Patent Attorneys
(86) Internationale Anmeldenummer: PCT/EP2017/070745
(87) Internationale Veröffentlichungsnummer: WO 2018/033563

(56) Entgegenhaltungen:
- EP-A1- 2 189 501
- EP-A1- 2 641 934
- EP-A2- 0 649 879

## Beschreibung

### Technisches Gebiet

Die vorliegende Erfindung betrifft das Gebiet der Siliconzusammensetzungen, wie sie insbesondere als Kleb- und Dichtstoffe eingesetzt werden.

### Stand der Technik

Siliconzusammensetzungen sind schon seit längerem bekannt und werden insbesondere als Kleb- und Dichtstoffe in unterschiedlichen Anwendungen eingesetzt. Weit verbreitet sind dabei sowohl einkomponentige, feuchtigkeitshärtende (RTV-1) Siliconzusammensetzungen als auch bei Raumtemperatur vernetzende, zweikomponentige (RTV-2) Siliconzusammensetzungen. Da Siliconzusammensetzungen oftmals im Baubereich eingesetzt werden, müssen sie hinsichtlich ihrer Eigenschaften, insbesondere der mechanischen Eigenschaften, besondere Vorschriften erfüllen. Beispielweise werden in der Schweiz solche Vorschriften vom Bundesamt für Bevölkerungsschutz erlassen. Unter anderem sind dabei auch gewisse Anforderungen an den Weiterreisswiderstand von Siliconzusammensetzung gestellt, wobei bekannt ist, dass gerade Siliconzusammensetzungen relativ niedrige Weiterreisswiderstände aufweisen.

EP0649879 offenbart Siliconzusammensetzungen, welche eine spezifische Füllstoffkombination aus mit Hexamethyldisilazan oberflächenmodifizierter Fällungskieselsäure und mit Stearat beschichtetem gefälltem Calciumcarbonat sowie einen Zinnkatalysator enthalten. Durch den Einsatz dieser sehr spezifischen Füllstoffe, kann der Weiterreisswiderstand der Siliconzusammensetzung verbessert werden.

Der Nachteil von Zusammensetzungen gemäss EP0649879 liegt darin, dass diese spezifischen Füllstoffe aufwendig herzustellen und somit teuer sind. EP2641934 offenbart ebenfalls Siliconzusammensetzungen mit verbessertem Weiterreisswiderstand, wobei dieser Effekt erreicht wird durch eine besondere Füllstoffkombination in Verbindung mit einer besonderen Katalysatorkombination.

Der Nachteil von Zusammensetzungen wie sie in EP2641934 offenbart werden liegt darin, dass diese Zusammensetzungen erhöhte Viskositäten aufweisen und daher nur schwer pumpbar sind. Das Dokument EP 2 189 501 offenbart Zusammensetzungen, die der vorliegenden Zusammensetzung ähnlich sind.

### Darstellung der Erfindung

Aufgabe der vorliegenden Erfindung ist es daher, eine Siliconzusammensetzung mit verbessertem Weiterreisswiderstand bereitzustellen, welche auch mit gängigen kostengünstigen Füllstoffen realisierbar ist und eine niedrige Viskosität in Verbindung mit verbesserter Pumpbarkeit aufweist.

Überraschenderweise wurde gefunden, dass Siliconzusammensetzungen gemäss Anspruch 1 diese Aufgabe lösen.

Durch den Einsatz von mindestens zwei verschieden reaktiven Polydiorganosiloxanpolymeren in Verbindung mit mindestens einem Füllstoff ist es möglich, den Weiterreisswiderstand der Siliconzusammensetzung signifikant zu verbessern, ohne die Viskosität wesentlich zu erhöhen. Die erfindungsgemässen Zusammensetzungen sind somit ebenfalls gut pumpbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Siliconzusammensetzung umfassend
- mindestens zwei reaktive Polyorganosiloxanpolymere **P1** und **P2** der Formel (I), die zusammen 20 bis 60 Gew.-%, bezogen auf die gesamte Siliconzusammensetzung, ausmachen, 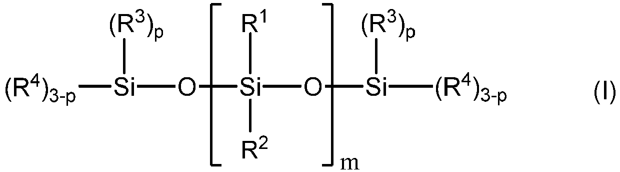
   wobei die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
   die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
   der Index p für einen Wert von 0, 1 oder 2 steht,
- mindestens einen Vernetzer V für Polydiorganosiloxane, mit einem Anteil von 0.5 bis 5 Gew.-%, bezogen auf die gesamte Siliconzusammensetzung,
- mindestens einen Katalysator **K,** mit einem Anteil von 0.001 bis 0.1 Gew.-%, bezogen auf die gesamte Siliconzusammensetzung,
- mindestens einen optional hydrophobierten Füllstoff **F,** ausgewählt aus der Gruppe umfassend gefällte oder pyrogene Kieselsäure und gemahlene oder gefällte Kreide, mit einem Anteil von 10 bis 70 Gew.-%, bezogen auf die gesamte Siliconzusammensetzung,
dadurch gekennzeichnet, dass
das reaktive Polyorganosiloxanpolymer **P1** eine höhere Reaktivität in der Kondensationsvernetzung mit Vernetzer **V** aufweist als das reaktive Polyorganosiloxanpolymer **P2** und das Molverhältnis **P1** : **P2** in der Zusammensetzung zwischen 1 und 5 liegt und dass die Molekulargewichte der Polymere **P1** und **P2** in den im Anspruch 1 offenbarten Bereichen liegen.

Mit "Poly" beginnende Substanznamen wie beispielsweise Polydimethylsiloxan bezeichnen im vorliegenden Dokument Substanzen, die formal zwei oder mehr der in ihrem Namen vorkommenden funktionellen Gruppen, wie beispielsweise Dimethylsiloxangruppen, pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer oligomeren oder polymeren Mischung von Molekülen oder Molekül-Resten bezeichnet. Es wird üblicherweise mittels Gelpermeationschromatographie (GPC) gegen Polydimethylsiloxan als Standard bestimmt.

Mit dem Begriff "Viskosität" wird die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.

Als "BET-Oberfläche" wird die Oberfläche von Füllstoffpartikeln bezeichnet, welche nach dem BET-Verfahren (benannt nach Brunauer, Emmett und Teller) und unter Verwendung der Methode, die in ISO 5794 (unter Einbezug von Annex D) gemessen wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Als "Raumtemperatur" wird eine Temperatur von 23 °C bezeichnet.

Alle in diesem Dokument erwähnten Industriestandards und Normen beziehen sich, sofern nichts anderes angegeben, auf die zum Zeitpunkt der Einreichung der Erstanmeldung gültige Fassung.

Die mindestens zwei Polydiorganosiloxane **P1** und **P2** in der erfindungsgemässen Siliconzusammensetzung sind Polydiorganosiloxane der Formel (I).

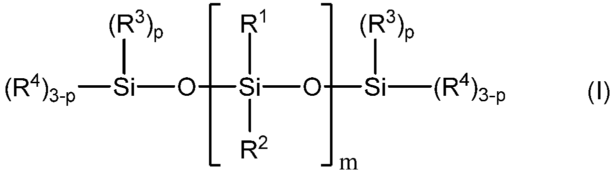

Dabei stehen die Reste R¹, R² und R³ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Insbesondere stehen die Reste R¹ und R² für Alkylreste mit 1 bis 5, insbesondere mit 1 bis 3, C-Atomen, bevorzugt für Methylgruppen. Die Reste R³ stehen unabhängig voneinander insbesondere für Phenyl-, Vinyl oder für Methylgruppen.

Die Reste R⁴ stehen unabhängig voneinander für Hydroxylgruppen oder für Alkoxy-, Acetoxy- oder Ketoximgruppen mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Der Index p steht für einen Wert von 0, 1 oder 2, insbesondere für 0 oder 1. Weiterhin ist der Index m bevorzugt so gewählt, dass das Polydiorganosiloxan **P1** bei einer Temperatur von 23°C eine Viskosität von 10 bis 10'000 mPa·s, insbesondere von 25 bis 7'500 mPa·s, bevorzugt von 50 bis 5'000 mPa·s aufweist und das Polydiorganosiloxan **P2** bei einer Temperatur von 23°C eine Viskosität von 10'000 bis 500'000 mPa·s, insbesondere von 20'000 bis 250'000 mPa·s, bevorzugt von 30'000 bis 200'000 mPa·s aufweist.

Stehen die Reste R⁴ für Ketoximgruppen, handelt es sich vorzugsweise um Ketoximgruppen mit jeweils 1 bis 13 C-Atomen und der Index p steht insbesondere für einen Wert von 0.

Bevorzugte Ketoximgruppen sind dabei Dialkylketoximgruppen deren Alkylgruppen jeweils 1 bis 6 C-Atome aufweisen. Vorzugsweise stehen die beiden Alkylgruppen der Dialkylketoximgruppen unabhängig voneinander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Meist bevorzugt steht die Ketoximgruppe für eine Ethyl-methylketoximgruppe.

Bevorzugt stehen die Reste R⁴ für Hydroxylgruppen und der Index p für einen Wert von 2.

Geeignete Polydiorganosiloxane, wie sie in Formel (I) dargestellt sind, sind bekannt und kommerziell erhältlich. Auch die Herstellung derartiger Polydiorganosiloxane erfolgt in bekannter Art und Weise, wie beispielsweise beschrieben in EP0658588.

Das reaktive Polydiorganosiloxanpolymer **P1** muss für die erfindungsgemässe Anwendung eine höhere Reaktivität in der Kondensationsvernetzung mit Vernetzer **V** aufweisen als das reaktive Polydiorganosiloxanpolymer **P2.** Dieser Unterschied in der Reaktivität von **P1** und **P2** kann auf zwei Arten erreicht werden:
Im ersten, bevorzugteren Fall handelt es sich um zwei gleich funktionalisierte Polydiorganosiloxane, die eine deutlich unterschiedliche Kettenlänge und damit ein deutlich unterschiedliches Molekulargewicht haben. Beispielsweise und bevorzugt handelt es sich um zwei Hydroxyl-terminierte Polydiorganosiloxane, besonders bevorzugt um zwei Hydroxyl-terminierte Poyldimethylsiloxane. Es kann sich aber auch um zwei Siloxane deutlich unterschiedlichen Molekulargewichts handeln, die beide die gleichen, z.B., Alkoxy-, Acetoxy- oder Ketoxim-Endgruppen aufweisen.

Ein deutlich unterschiedliches Molekulargewicht führt dazu, dass das kleinere Polydiorganosiloxan erstens eine deutlich niedrigere Viskosität aufweist und eine deutlich höhere molekulare Mobilität innerhalb einer Zusammensetzung besitzt, was beispielsweise durch geringere Kettenverschlaufung oder - verhakung und ein kleineres Molekülvolumen beeinflusst ist. Zweitens besitzt das kleinere Polydiorganosiloxan eine höhere Dichte an reaktiven Endgruppen. "Deutlich unterschiedlich" in Bezug auf das Molekulargewicht heisst in diesem Fall, dass sich die Molekulargewichtsbereiche keinesfalls angrenzen oder gar überlappen dürfen und bevorzugt die Obergrenze des Molekulargewichtsbereichs von **P1** mindestens einen Faktor 2, bevorzugt mindestens einen Faktor 5 niedriger liegt als die Untergrenze des Molekulargewichtsbereichs von **P2.**

Das reaktive Polydiorganoxanpolymer **P1** besitzt ein Molekulargewicht von zwischen 500 und 2'500 g/mol und das reaktive Polydiorganosiloxanpolymer **P2** besitzt ein Molekulargewicht von zwischen 50'000 und 250'000 g/mol.

Eine zweite Möglichkeit, unterschiedliche Reaktivitäten in den Polymerer **P1** und **P2** einzustellen liegt in der Verwendung unterschiedlicher reaktiver Endgruppen. Dabei kann der Unterschied darin liegen, dass beispielsweise die Anzahl hydrolysierbarer Bindungen an den Endgruppen unterschiedlich ist. So ist beispielsweise ein Polydiorganosiloxanpolymer mit Trimethoxysilyl-Endgruppen reaktiver als eines mit einer Methyldimethoxysilyl-Endgruppen. Der Unterschied kann auch darin liegen, dass die Art der hydrolisierbaren Bindungen chemisch unterschiedlich ist. So ist beispielsweise eine Polydiorganosiloxan mit einer Trimethoxysilyl-Endgruppe reaktiver als eines mit einer sterisch anspruchsvolleren Triethoxysilyl-Endgruppe.

Die Art und relative Reaktivität solcher Endgruppen sind dem Fachmann auf dem Gebiet der Slliconchemie bestens bekannt.

Es ist auch möglich, für die vorliegende Erfindung eine Mischform dieser obengenannten Massnahmen zu verwenden, beispielsweise zwei Polydiorganosiloxane **P1** und **P2** mit unterschiedlichem Molekulargewicht und gleichzeitig unterschiedlichen reaktiven Endgruppen zu verwenden.

Das molare Verhältnis (Molverhältnis) der beiden Polydiorganosiloxanpolymere **P1** und **P2** muss innerhalb eines Bereiches liegen um den erfindungsgmässen Effekt zu erzielen. Das Molverhältnis von **P1** zu **P2** in der gesamten Zusammensetzung muss zwischen 1 und 5 liegen.

Die ein- oder zweikomponentige Siliconzusammensetzung umfasst weiter einen oder mehrere monomere Silane und/oder oligomere Siloxane als Vernetzer V für das Polyorganosiloxan, wobei ein oligomeres Siloxan ein Kondensationsprodukt von monomeren Silanvernetzern ist. Monomere Silanvernetzer und auch oligomere Kondensationsprodukte davon sind als Vernetzer für Siliconformulierungen bekannt.

Monomere Silanvernetzer sind im allgemeinen Silanverbindungen, die zwei oder mehr, z.B. drei oder mehr und bevorzugt 3 oder 4, funktionelle Gruppen enthalten. Unter funktionellen Gruppen werden hier insbesondere Gruppen verstanden, die mit funktionellen Gruppen des Polyorganosiloxans unter Bildung einer Bindung reagieren können, wobei die Reaktion gegebenenfalls durch Hydrolyse, Alkoholyse oder eine andere Abspaltungsreaktion bei der funktionellen Gruppe des Polydiorganosiloxans und/oder des Vernetzers eingeleitet wird. Die funktionellen Gruppen können an jeder Stelle des Silanvernetzers vorliegen, bevorzugt sind sie an einem Si-Atom des monomeren Silanvernetzers gebunden.

Beispiele für funktionelle Gruppen, die ein monomerer Silanvernetzer aufweisen kann, sind Alkoxygruppen, wie C₁-₅-Alkoxygruppen, bevorzugt Methoxy-, Ethoxy- oder Propoxygruppen, Acetoxygruppen, Amidgruppen, bevorzugt N-Alkylamidgruppen, insbesondere N-Methylbenzamid- oder N-Methylacetamidgruppen, Amingruppen, bevorzugt alkylierte Amingruppen wie beispielsweise Cyclohexylamin, insbesondere aber dialkylierte Amingruppen wie beispielsweise N,N-Diethylamin, Halogen-Atome, insbesondere Chlor und/oder Brom-Atome sowie Hydrido-Substituenten oder Oximgruppen. Als Beispiele für Oximgruppen wird auf die vorstehend beschriebenen bevorzugten Ketoximgruppen verwiesen. Diese funktionellen Gruppen sind im Allgemeinen direkt an einem Si-Atom des monomeren Silanvernetzers gebunden.

Monomere Silanvernetzer können z.B. eine der folgenden allgemeinen Formeln (II) bis (IV) aufweisen.

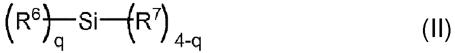

(R⁷)₃-Si-R⁸-Si-(R⁷)₃ (III)

N(H)ₙ(Si-(R⁷)₃)₃₋ₙ (IV)

Dabei steht der Rest R⁶ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Beispiele für R⁶ sind Alkylgruppen mit 1 bis 5 C-Atomen, bevorzugt Methyl, Ethyl oder Propyl, Vinyl, Arylgruppen, wie Phenyl, Cycloalkylgruppen, wie Cyclohexyl, sowie substituierte Alkylgruppen, mit 1 bis 8 C-Atomen, bevorzugt Methyl, Ethyl oder Propyl, die mit einem oder mehreren Substituenten, wie gegebenenfalls substituiertes Amino (NH₂, NHR, NR₂, wobei R unabhängig voneinander Alkyl, Aryl oder Cycloalkyl ist), Mercapto, Glycidoxy, Methacrylat, Acrylat oder Carbamato, funktionalisiert sind.

Der Rest R⁷ steht unabhängig voneinander für eine Hydroxylgruppe oder für eine Alkoxy-, Acetoxy- oder Ketoximgruppe mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Ketoximgruppen und Alkoxygruppen sind bereits vorstehend beschrieben worden.

Weiterhin steht der Index q für einen Wert von 0 bis 4, mit der Massgabe, dass falls q für einen Wert von 3 oder 4 steht, mindestens q-2 Reste R⁶ jeweils mindestens eine mit der funktionellen Gruppen des Polydiorganosiloxans reaktive Gruppe aufweisen. Insbesondere steht q für einen Wert von 0, 1 oder 2, bevorzugt für einen Wert von 0 oder 1.

R⁸ ist eine zweiwertige Alkylengruppe, z.B. eine C₁₋₆-Alkylengruppe, insbesondere Methylen, Ethylen oder Hexylen, eine Arylengruppe, wie Phenylen, oder eine Cycloalkylengruppe, wobei Alkylen bevorzugt ist. Der Index n steht für 0, 1 oder 2, bevorzugt 1.

Für die Wahl mindestens eines Silans der Formeln (III)-(IV) als Vernetzer V für Polydiorganosiloxane können unterschiedliche Anforderungen an die Siliconzusammensetzung ausschlaggebend sein. Einerseits spielt die Reaktivität des Silans eine wichtige Rolle, wobei grundsätzlich höherreaktive Silane bevorzugt werden. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt, da die flüchtigen Alkoholspaltprodukte die bei der Vernetzung entstehen im letzteren Fall toxikologisch bedenklicher sind.

Konkrete Beispiele für monomere Silanvernetzer sind Methyltrimethoxysilan, Chlormethyltrimethoxysilan, Vinyltrimethoxysilan, Phenyltrimethoxysilan, Propyltrimethoxysilan, 3-Mercaptopropyltrimethoxysilan, 3-Aminopropyltrimethoxysilan, 3-Methacryloxypropyltrimethoxysilan, 3-Glycidoxypropyltrimethoxysilan, 2-Aminoethyl-3-aminopropyltrimethoxysilan, 1,2-Bis-(trimethoxysilyl)ethan, Bis-(trimethoxysilylpropyl)amin, N-(n-Butyl)-3-aminopropyltrimethoxysilan, N-Cyclohexylaminomethyltrimethoxysilan, Methacryloxymethyltrimethoxysilan, O-Methylcarbamatomethyltrimethoxysilan oder die entsprechenden Verbindungen, bei denen die Methoxygruppe durch Ethoxy, Propoxy, Oxim bzw. Ketoxim ersetzt ist, wie beispielsweise Methyltriethoxysilan, Vinyltriethoxysilan, Phenyltriethoxysilan, Methyltripropoxysilan und Phenyltripropoxysilan, sowie beispielsweise Bis-(N-methylacetamido)methylethoxysilan, Tris-(methylethylketoximo)methylsilan, Tris-(methylethylketoximo)vinylsilan und Tris-(methylethylketoximo)phenylsilan. Weitere Beispiele sind Tetramethoxysilan, Tetraethoxysilan, Tetra-n-butoxysilan und Tetra-n-propoxysilan.

Bei den oligomeren Siloxanen geeignet als Vernetzer V handelt es sich um Kondensationsprodukte von einem oder mehreren solcher monomeren Silanvernetzer. Solche oligomeren Siloxane sind bekannt und im Handel erhältlich, z.B. unter den Handelsnamen Dynasylan^{®} 1146 oder Dynasylan^{®} 6490 von der Firma Evonik Degussa GmbH. Oligomere von funktionellen Silanen sind kompliziert aufgebaute 3-dimensionale Verbindungen. Das oligomere Siloxan kann z.B. aus Hydrolyse und Kondensation von einem oder mehreren gleichen oder unterschiedlichen monomeren Silanvernetzern gebildet werden.

Ein solches oligomeres Siloxan enthält funktionelle Gruppen, die aus den für ihre Synthese verwendeten monomeren Silanvernetzern stammen. Beispielsweise führt eine erste Kondensation von zwei Tetramethoxysilan-Molekülen zu einem Dimer, das sechs funktionelle Gruppen enthält; aus jeweils einer funktionellen Gruppe jedes Moleküls wird durch Kondensation die Verknüpfung gebildet wird. Wie bereits ausgeführt, kann die Struktur der gebildeten Oligomere kompliziert sein. Die Anzahl der funktionellen Gruppen im Oligomer kann nach Kondensationsgrad, Art der Kondensation und eingesetzten monomeren Silanvernetzer varieren, ist aber zumindest 2, in der Regel aber größer, z.B. 4 oder mehr.

Beispielsweise sind geeignete oligomere Siloxane sind Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Der Kondensationsgrad des oligomeren Siloxans, d.h. die Zahl der miteinander kondensierten monomeren Silanvernetzer, kann in breiten Bereichen je nach Anwendungszweck variieren, kann aber z.B. im Bereich von 2 bis 200 und bevorzugt von 4 bis 50 liegen. Es ist verständlich, dass der Kondensationsgrad, insbesondere bei höheren Kondensationsgraden, häufig lediglich einen Mittelwert darstellt.

Selbstverständlich kann als Vernetzer **V** für die erfindungsgemässe Siliconzusammensetzung auch eine beliebige Mischung der vorhergehend genannten Silane eingesetzt werden.

Der Anteil des Vernetzers **V** für Polydiorganosiloxane beträgt vorzugsweise 0.5 bis 4.5 Gew.-%, insbesondere 0.6 bis 4 Gew.-%, bevorzugt 0.7 bis 3 Gew.-%, der gesamten Siliconzusammensetzung.

Die erfindungsgemässe Siliconzusammensetzung umfasst mit einem Anteil von 0.001 bis 0.1 Gew.-%, bezogen auf die gesamte Siliconzusammensetzung weiterhin mindestens einen Katalysator **K** für die Vernetzung von Polydiorganosiloxanen, wobei der Katalysator **K** mindestens einen Komplex eines Elements ausgewählt aus den Gruppen 1, 4, 8, 9, 10, 12, 13, 14, und 15 des Periodensystems umfasst, insbesondere einen Zinn- oder Titankomplex oder eine Mischung davon. Ein Katalysator für die Vernetzung von Polydiorganosiloxanen ist in der Lage, die Hydrolyse und/oder Kondensation von hydrolysierbaren und/oder hydrolysierten Silanen, Siloxanen und Polysiloxanen zu katalysieren. Diese Reaktionen führen in den Siliconzusammensetzungen wie in der vorliegenden Erfindung beschrieben zu einer Vernetzung der Polydiorganosiloxanketten mit Hilfe der enthaltenen Vernetzer **V.** Dabei kann es sich bei den als Katalysator geeigneten Verbindungen zum Beispiel um organische Moleküle handeln, wie etwa basische Heterozyklen, oder um Metallkomplexe.

Der Kondensationskatalysator ist bevorzugt eine zinnorganische Verbindung oder ein Titanat bzw. Organotitanat. Diese sind im Handel erhältlich. Es ist auch möglich und in gewissen Fällen sogar bevorzugt, Mischungen verschiedener Katalysatoren einzusetzen.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinnacetoacetonat, Di-n-butylzinndioxid, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-octylzinndiacetat, Di-n-octylzinnacetoacetonat, Di-n-octylzinndioxid, Di-n-octylzinndi-2-ethylhexanoat, Di-n-octylzinndi-2,2-dimethyloctanoat, Di-n-octylzinndimaleinat und Di-n-octylzinndilaurat.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei z.B. diejenigen, die ausgewählt sind aus einer Alkoxygruppe, Sulfonatgruppe, Carboxylatgruppe, Dialkylphosphatgruppe, Dialkylpyrophosphatgruppe und Acetylacetonatgruppe. Bevorzugte Titanate sind z.B. Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor^{®} AA, GBA, GBO, AA-75, AA-65, AA-105, DC, BEAT, IBAY kommerziell erhältlich von der Firma Dorf Ketal oder unter den Handelsnamen Tytan^{™} PBT, TET, X85, TAA, ET, S2, S4 oder S6 kommerziell erhältlich von Borica.

Weiterhin bevorzugt sind Zirkonate, Bismutate und Aluminate. Geeignete Zirkonate sind beispielsweise unter den Handelsnamen Tyzor^{®} NBZ, NPZ, TEAZ, 212, 215, 217, 223 kommerziell erhältlich von der Firma Dorf Ketal oder unter den Handelsnamen K-Kat 4205 oder K-Kat XC-6212 von der Firma King Industries.

Am meisten bevorzugte Bismutate sind Bismutcarboxylate. Die Bismutcarboxylate sind aus Bi(III)-Verbindungen mit den organischen Säuren R-COOH nach den literaturbekannten Verfahren herstellbar oder als handelsübliche Produkte unter den jeweiligen Markennamen erhältlich, wie Bismuttrioctoat oder Bismuttrineodecanoat, beispielsweise unter den Markennamen Borchi^{®} Kat (Fa. Borchers GmbH) oder Tegokat^{®} (Fa. Goldschmidt TIB GmbH), Neobi^{®} 200, Fa. Shepherd, Coscat^{®}, Fa. Caschem. Weiterhin geeignete Bismutate sind beispielsweise erhältlich unter dem Handelsnamen K-Kat 348 und K-Kat XC-8203 von der Firma King Industries.

Ein geeignetes Aluminat ist beispielsweise erhältlich unter dem Handelsnamen K-Kat 5218 von der Firma King Industries.

Selbstverständlich ist es möglich oder in gewissen Fällen sogar bevorzugt, Mischungen verschiedener Komplexe eines Elements ausgewählt aus den Gruppen 1, 4, 8, 9, 10, 12, 13, 14 und 15 des Periodensystems der Elemente als Katalysator **K** einzusetzen. Es kann auch bevorzugt sein, mindestens einen Komplex mit organischen Katalysatoren, wie z.B. Aminen, zu kombinieren. Der Gewichtsanteil an Katalysator **K** beträgt vorzugsweise 0.1 bis 6 Gewichtsteile, insbesondere 0.2 bis 5 Gewichtsteile, bevorzugt 0.5 bis 3 Gewichtsteile, bezogen auf 100 Gewichtsteile Polydiorganosiloxan **P1** und **P2** in der gesamten Siliconzusammensetzung.

Die erfindungsgemässe Siliconzusammensetzung umfasst weiterhin mindestens einen optional hydrophobierten Füllstoff **F,** ausgewählt aus der Gruppe umfassend gefällte oder pyrogene Kieselsäure und gemahlene oder gefällte Kreide, mit einem Anteil von 10 bis 70 Gew.-%, bezogen auf die gesamte Siliconzusammensetzung.

Als Füllstoff geeignet sind alle dem Fachmann im Gebiet der Formulierung von Siliconzusammensetzungen bekannten Füllstoffe ausgewählt aus der Gruppe umfassend gefällte oder pyrogene Kieselsäure und gemahlene oder gefällte Kreide.

Bevorzugt als Kreidefüllstoff geeignet ist Calciumcarbonat, z.B. in Form von Kalkstein, Kreidegestein, Muschelkalk oder Marmor. Dabei kann das Calciumcarbonat aus natürlichen Vorkommen, beispielsweise Marmorbrüchen, gewonnen oder mit bekannten Verfahren, beispielsweise Fällungsreaktionen, hergestellt worden sein. Natürliches Calciumcarbonat kann Anteile an weiteren Mineralien, z.B. Magnesiumcarbonat enthalten. Weiter kann das Calciumcarbonat gemahlen sein und es kann unbehandelt oder modifiziert, insbesondere oberflächenbehandelt, also hydrophobiert, vorliegen. Die Oberflächenbehandlung kann beispielsweise durch Behandlung mit Fettsäuren, insbesondere Stearaten, bevorzugt mit Calciumstearat, erfolgen. Selbstverständlich können auch Mischungen verschiedener Calciumcarbonate eingesetzt werden.

Bevorzugt umfasst die erfindungsgemässe Siliconzusammensetzung mindestens eine Kreide, insbesondere mindestens eine gemahlene Kreide mit einer BET-Oberfläche von 5 bis 50 m²/g und bevorzugt einer mittleren Teilchengrösse d50 von 1 bis 10 µm.

Die Angabe der Teilchengrösse d50 bezieht sich dabei darauf, dass 50 Gew.-% der Teilchen eine Grösse aufweisen, welche gleich oder kleiner ist als der angegebene Wert. Die Teilchengrösse d50 kann typischerweise durch Laserlichtstreuung in Anlehnung an die Norm ISO 13320:2009, beispielsweise mit dem Gerät CILAS 920 der Firma CILAS bestimmt werden.

Ein weiterer bevorzugter Füllstoff ist Kieselsäure, insbesondere mit einer BET-Oberfläche von 50 bis 300 m²/g, bevorzugt von 100 bis 255 m²/g.

Geeignete Kieselsäuren sind gefällte oder pyrogene Kieselsäuren, die oberflächenhydrophobiert sein können oder die unbehandelt, d.h. hydrophil, vorliegen können.

Als hydrophobierte Kieselsäuren eignen sich typischerweise siliconisierte und/oder silanisierte Kieselsäuren, welche dann einen Kohlenstoffgehalt von 0.6 bis 6.5 Gew.-% bezogen auf das Gesamtgewicht der Kieselsäure aufweisen. Geeignete Kieselsäuren können aber auch nicht behandelt, also hydrophil, vorliegen. Es können weiterhin auch Mischungen verschiedener Kieselsäuren eingesetzt werden.

Der mindestens eine Füllstoff **F** der in der erfindungsgemässen Zusammensetzung vorhanden ist beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es ist möglich und in bevorzugten Ausführungsformen sogar vorteilhaft, verschiedene Füllstoffe in der erfindungsgemässen Siliconzusammensetzung zu kombinieren. Dabei kann es sich um verschiedene erfindungsgemässe, ausgewählt aus der Gruppe umfassend gefällte oder pyrogene Kieselsäure und gemahlene oder gefällte Kreide handeln, oder um mindestens einen dieser ebengenannten mit einem oder mehrerer weiterer Füllstoffe.

Beispiele für geeignete weitere Füllstoffe sind organische oder anorganische Füllstoffe, welche gegebenenfalls mit Fettsäuren, insbesondere Stearinsäure, beschichtet sind, kalzinierte Kaoline, Aluminiumoxide, Aluminiumhydroxide, Russ, insbesondere industriell hergestellter Russ, Aluminiumsilicate, Magnesium-Aluminiumsilicate, Zirkoniumsilicate, Quarzmehl, Cristobalitmehl, Diatomeenerde, Glimmer, Eisenoxide, Titanoxide, Zirconiumoxide, Gips, Annalin, Bariumsulfat, Borcarbid, Bornitrid, Graphit, Kohlefasern, Zeolithe, Glasfasern oder Glashohlkugeln, deren Oberfläche gegebenenfalls mit einem Hydrophobierungsmittel behandelt ist. Bevorzugte weitere Füllstoffe sind kalzinierte Kaoline, Russ, sowie flammhemmende Füllstoffe, wie Hydroxide oder Hydrate, insbesondere Hydroxide oder Hydrate von Aluminium, bevorzugt Aluminiumtrihydroxid.

Eine ganz besonders bevorzugte Ausführungsform der erfindungsgemässen Siliconzusammensetzung ist dadurch gekennzeichnet, dass der Füllstoff **F** zwei Füllstoffe **F1** und **F2** umfasst, beide ausgewählt aus der Gruppe umfassend gefällte oder pyrogene Kieselsäure und gemahlene oder gefällte Kreide, wobei der eine Füllstoff **F1** eine BET-Oberfläche von zwischen 5 und 50 m²/g aufweist und der andere Füllstoff **F2** eine BET-Oberfläche von zwischen 50 und 300 m²/g aufweist.

Eine ganz besonders bevorzugte Ausführungsform enthält als **F2** mindestens eine Kieselsäure mit einer BET-Oberfläche von 50 bis 300 m²/g sowie als **F1** mindestens eine Kreide mit einer BET-Oberfläche von 5 bis 50 m²/g, bevorzugt 10 bis 25 m²/g, und bevorzugt einer mittleren Teilchengrösse d50 von 10 bis 1000 nm.

Eine Gesamtmenge an Füllstoff **F** in bevorzugten Ausführungsformen der erfindungsgemässen Siliconzusammensetzung liegt typischerweise im Bereich von 10 bis 70 Gew.-%, bevorzugt 15 bis 60 Gew.-%, besonders bevorzugt 20 bis 50 Gew.-%, bezogen auf das Gesamtgewicht der Zusammensetzung .

Die erfindungsgemässe Siliconzusammensetzung kann gegebenenfalls noch weitere Bestandteile enthalten.

Derartige zusätzliche Bestandteile sind insbesondere Hilfsstoffe, wie beispielsweise Haftvermittler, Verarbeitungshilfsmittel, Verlaufsmittel, Stabilisatoren, Farbstoffe, Pigmente, Weichmacher, Duftstoffe, Biozide, Thixotropierungsmittel, Rheologiemodifikatoren, Phosphate, Inhibitoren, Hitzestabilisatoren, Antistatika, Flammschutzmittel, Radikalfänger, Wachse und weitere, dem Fachmann bekannte gängige Rohstoffe und Additive. Von solchen Hilfsstoffen können mehrere oder alle oben genannten oder weitere, ungenannte in der erfindungsgemässen Siliconzusammensetzung enthalten sein, und jeder einzelne der zusätzlich enthaltenen Hilfsstoffe ist bevorzugt mit einem Anteil von weniger als 25 Gewichtsteilen, besonders bevorzugt weniger als 15 Gewichtsteilen, am meisten bevorzugt weniger als 10 Gewichtsteilen, bezogen auf 100 Gewichtsteile aller enthaltenen Polydiorganosiloxane **P1** und **P2** in der Zusammensetzung, enthalten. Beim Einsatz von derartigen optionalen Bestandteilen ist es vorteilhaft, alle genannten, in der Siliconzusammensetzung gegebenenfalls vorhandenen, Bestandteile so auszuwählen, dass die Lagerstabilität der Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Siliconzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Geeignete Weichmacher für die erfindungsgemässe Siliconzusammensetzung sind insbesondere trialkylsilylterminierte Polydialkylsiloxane, insbesondere trimethylsilylterminierte Polydimethylsiloxane. Bevorzugt sind trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Es ist auch möglich anstatt der Polysiloxan-Weichmacher, organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen. Der Anteil des Weichmachers beträgt vorzugsweise 2 bis 35 Gew.-%, insbesondere 5 bis 25 Gew.-%, der gesamten Siliconzusammensetzung.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.

Es ist dem Fachmann klar, dass bei der Verwendung von Silanen als Haftvermittler die Möglichkeit besteht, dass diese je nach Bedingungen, beispielsweise bei Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des Haftvermittlers beträgt vorzugsweise 0.1 bis 15 Gew.-%, insbesondere 0.5 bis 10 Gew.-%, bevorzugt 1 bis 5 Gew.-%, der gesamten zweikomponentigen Siliconzusammensetzung.

Die erfindungsgemässe Siliconzusammensetzung kann als einkomponentige oder als zweikomponentige Zusammensetzung ausgebildet sein.

Handelt es sich um eine einkomponentige Siliconzusammensetzung ist sie insbesondere so beschaffen, dass sie unter Einfluss von Wärme oder von Feuchtigkeit vernetzt. Meist bevorzugte einkomponentige Siliconzusammensetzungen vernetzen bei Raumtemperatur unter dem Einfluss von Feuchtigkeit, insbesondere von Luftfeuchtigkeit, wobei die Vernetzung durch Kondensation von Silanolgruppen unter Bildung von Siloxanbindungen erfolgt.

Im Falle einer einkomponentigen erfindungsgemässen Siliconzusammensetzung ist die Siliconzusammensetzung bevorzugt so formuliert, dass sie nach Lagerung während 12 h bei 23 °C in einer Kunststoffkartusche beim Auspressen durch eine Düse mit 3 mm Innendurchmesser und einer Auspressgeschwindigkeit von 60 mm/min eine Auspresskraft von zwischen 300 N und 1300 N, bevorzugt 400 N und 1200 N, besonders bevorzugt zwischen 500 N und 1000 N, benötigt.

Handelt es sich bei der Siliconzusammensetzung um eine zweikomponentige Zusammensetzung, so ist sie insbesondere eine zweikomponentige Siliconzusammensetzung bestehend aus einer Komponente A und einer Komponente **B,** wobei das Polydiorganosiloxan, der Vernetzer und das Katalysator- oder Beschleunigersystem aus zinnorganischer Verbindung und Komplex so auf die beiden Komponenten aufgeteilt werden, dass die Vernetzungsreaktion erst beim oder nach dem Mischen der beiden Komponenten einsetzt.

Insbesondere besteht die zweikomponentige Siliconzusammensetzung aus einer Komponente **A** umfassend
- die mindestens zwei reaktiven Polydiorganosiloxanpolymere **P1** und **P2,** die zusammen 20 bis 60 Gew.-%, bezogen auf die gesamte Siliconzusammensetzung, ausmachen,
- den mindestens einen optional hydrophobierten Füllstoff **F,** ausgewählt aus der Gruppe umfassend gefällte oder pyrogene Kieselsäure und gemahlene oder gefällte Kreide, mit einem Anteil von 10 bis 70 Gew.-%, bezogen auf die gesamte Siliconzusammensetzung;
und einer Komponente **B** umfassend
- den mindestens einen Vernetzer **V** für Polydiorganosiloxane, mit einem Anteil von 0.5 bis 5 Gew.-%, bezogen auf die gesamte Siliconzusammensetzung,
- den mindestens einen Katalysator **K,** mit einem Anteil von 0.001 bis 0.1 Gew.-%, bezogen auf die gesamte Siliconzusammensetzung.

Sowohl Komponente **A** als auch Komponente **B** der beschriebenen zweikomponentigen Siliconzusammensetzung werden unter Ausschluss von Feuchtigkeit hergestellt und aufbewahrt. Getrennt voneinander sind die beiden Komponenten lagerstabil, d.h., sie können in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Siliconzusammensetzung werden die Komponenten **A** und **B,** beispielsweise durch Rühren, Kneten, Walzen oder dergleichen, insbesondere jedoch über einen Statikmischer, miteinander vermischt, wobei es zur Aushärtung der Zusammensetzung kommt. Die Aushärtung der zweikomponentigen Siliconzusammensetzung erfolgt insbesondere bei Raumtemperatur.

Insbesondere können erfindungsgemässe Siliconformulierungen auf Standardausrüstung zum Pumpen, Mischen und Dosieren von RTV-2 Siliconen verarbeitet werden, z.B. hydraulisch betriebene Schöpfkellenpumpen wie Reinhardt-Technik Ecostar 250.

Handelt es sich bei der erfindungsgemässen Siliconzusammensetzung um eine zweikomponentige Siliconzusammensetzung, wird diese insbesondere so eingesetzt, dass das Gewichtsverhältnis der Komponente **A** zur Komponente **B** ≥ 1:1, insbesondere von 3:1 bis 15:1, bevorzugt von 7:1 bis 13:1, beträgt.

Bei der Vernetzung der Siliconzusammensetzung entstehen als Reaktionsprodukte der Kondensationsreaktion insbesondere auch Verbindungen der Formel HO-R⁴, wobei R⁴ bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird beeinträchtigen. Meist bevorzugt handelt es sich beim Reaktionsprodukt der Formel HO-R⁴ um eine Verbindung, welche sich leicht aus der vernetzenden oder der bereits vernetzten Zusammensetzung verflüchtigt.

Weiterhin betrifft die vorliegende Erfindung die Verwendung einer Siliconzusammensetzung, wie sie vorhergehend beschrieben worden ist, als Klebstoff, Dichtstoff, Beschichtung oder als Gussmasse.

Weiterhin betrifft die vorliegende Erfindung eine gehärtete Siliconzusammensetzung erhältlich aus einer einkomponentigen Siliconzusammensetzung gemäss vorhergehender Beschreibung, insbesondere durch Reaktion mit Feuchtigkeit, oder aus einer ebenfalls vorhergehend beschriebenen zweikomponentigen Siliconzusammensetzung durch Mischen der Komponente **A** mit der Komponente **B.**

Weiterhin betrifft die vorliegende Erfindung die Verwendung zweier reaktiver Polydiorganoxiloxanpolymere **P1** und **P2,** wobei das reaktive Polyorganosiloxanpolymer **P1** eine höhere Reaktivität in der Kondensationsvernetzung mit einem Vernetzer **V** für Polydiorganoxiloxane aufweist als das reaktive Polyorganosiloxanpolymer **P2** und das Molverhältnis **P1** : **P2** in der Zusammensetzung zwischen 0.1 und 15 liegt, zusammen mit mindestens einem Füllstoff **F,** ausgewählt aus der Gruppe umfassend gefällte oder pyrogene Kieselsäure und gemahlene oder gefällte Kreide, mit mindestens einem Vernetzer **V,** sowie zusammen mit einem Katalysator **K** zur Erhöhung des Weiterreisswiderstands von Siliconzusammensetzungen.

Weiterhin betrifft die vorliegende Erfindung die Verwendung zweier reaktiver Polydiorganoxiloxanpolymere **P1** und **P2,** wobei das reaktive Polyorganosiloxanpolymer **P1** eine höhere Reaktivität in der Kondensationsvernetzung mit einem Vernetzer **V** für Polydiorganoxiloxane aufweist als das reaktive Polyorganosiloxanpolymer **P2** und das Molverhältnis **P1** : **P2** in der Zusammensetzung zwischen 0.1 und 15 liegt, zusammen mit mindestens einem Füllstoff **F,** wobei der Füllstoff **F eine** Füllstoffkombination aus **F1** und **F2** umfasst, umfassend als **F2** mindestens einen Füllstoff, bevorzugt eine Kieselsäure, mit einer BET-Oberfläche von 50 bis 300 m²/g sowie als **F1** mindestens einen Füllstoff, bevorzugt eine Kreide, mit einer BET-Oberfläche von 10 bis 25 m²/g und bevorzugt einer mittleren Teilchengrösse d50 von 10 bis 1000 nm, mit mindestens einem Vernetzer **V,** sowie zusammen mit einem Katalysator **K** zur Erhöhung des Weiterreisswiderstands von Siliconzusammensetzungen.

Es ist ein besonderer Vorteil der vorliegenden Erfindung, dass nunmehr die Formulierung von ein- und zweikomponentigen Siliconzusammensetzungen mit verbessertem Weiterreisswiderstand möglich ist, wobei als Füllstoffe sowohl natürliche als auch gefällte Kreiden, die gemeinsam mit pyrogenen sowie gefällten Kieselsäuren, die behandelt oder unbehandelt vorliegen können, eingesetzt werden. Im Gegensatz zum Stand der Technik, kann also eine deutlich erweiterte Palette von Füllstoffen, insbesondere auch von besonders kostengünstigen, verwendet werden. Weiterhin sind die so hergestellten Zusammensetzungen aussergewöhnlich niedrigviskos und gut pumpbar.

Die erfindungsgemässen Zusammensetzungen besitzen im ausgehärteten Zustand insbesondere eine Weiterreissfestigkeit (Weiterreisswiderstand, abgekürzt "TPR", gemessen nach DIN ISO 34-1 an Prüfkörpern vom Typ C) von mindestens 3 N/mm, bevorzugt mindestens 4 N/mm, besonders bevorzugt von mindestens 5 N/mm.

Die Viskositäten der nicht ausgehärteten einkomponentigen erfindungsgemässen Zusammensetzungen, sowie die Mischviskositäten der nicht ausgehärteten zweikomponentigen Zusammensetzungen unmittelbar nach Mischen der Komponenten liegen dabei bei 23 °C und einer Scherrate von 0.89 s⁻¹ insbesondere unter 3'000 Pa·s, bevorzugt unter 2'500 Pa·s.

Eine erfindungsgemässe zweikomponentige Zusammensetzung kann als Klebstoff oder Dichtstoff in einem Verfahren zum Verkleben oder Verfugen von Substraten verwendet werden, wodurch eine beschleunigte Aushärtung des Kleb- oder Dichtstoffs ermöglicht wird. Das erfindungsgemäße Verfahren umfasst
a) das Einmischen der Komponente **B** in die Komponente **A,** um eine Mischung zu erhalten,
b) die Applikation der Mischung auf ein Substrat und Inkontaktbringen der auf dem Substrat applizierten Mischung mit einem weiteren Substrat, um eine Klebverbindung zwischen den Substraten zu erhalten, oder
   das Einbringen der Mischung in eine Fuge zwischen zwei Substraten, um eine Verfugung zwischen den Substraten zu erhalten, und
c) das Härten der Mischung,
wobei das Einmischen gemäß Schritt a) vor oder während der Applikation oder Einbringung gemäß Schritt b) durchgeführt wird.

Für die erfindungegemässen einkomponentigen Zusammensetzungen erfolgen die gleichen Anwendungsschritte, wobei natürlich das Mischen der Komponenten unterbleibt.

Die Komponenten der zweikomponentigen erfindungsgemässen Zusammensetzung werden zur Lagerung getrennt voneinander aufbewahrt. Die Vermischung der Komponenten **A** und **B** in Schritt a) kann auf übliche Weise erfolgen, z.B. durch Einrühren der Komponente **B** in die Komponente **A,** was manuell oder mithilfe einer geeigneten Rührvorrichtung, z.B. mit einem Statikmischer, Dynamikmischer, Speedmixer, Dissolver etc. erfolgen kann. Die beiden Komponenten können auch für die Applikation oder Einbringung aus den getrennten Aufbewahrungsbehältern, z.B. mit Zahnradpumpen, ausgepresst und vermischt werden. Die Vermischung kann dabei z.B. in Zufuhrleitungen oder Düsen für die Applikation oder Einbringung erfolgen oder unmittelbar auf dem Substrat oder in der Fuge erfolgen.

Das Einmischen gemäß Schritt a) kann somit vor oder während der Applikation oder Einbringung gemäß Schritt b) durchgeführt wird. Die Vermischung sollte relativ kurz vor der weiteren Verarbeitung erfolgen, da mit der Vermischung der Aushärteprozess beginnt.

Die Mischviskosität der beiden Komponenten **A** und **B,** also die Viskosität, die sich während und unmittelbar nach dem Mischen der beiden Komponenten **A** und **B** einstellt, liegt dabei bei 23 °C und einer Scherrate von 0.89 s⁻¹ insbesondere unter 3'000 Pa·s, bevorzugt unter 2'500 Pa·s. Somit bleibt eine leichte Pumpbarkeit der Mischung für die Applikation gewährleistet.

Die Applikation auf ein Substrat oder das Einbringen in eine Fuge zwischen Substraten gemäß Schritt b) kann auf übliche Weise erfolgen, z.B. von Hand oder in einem automatisierten Prozess mithilfe von Robotern. Bei Verkleben wird das mit der Mischung versehene Substrat mit einem weiteren Substrat in Kontakt gebracht, gegebenenfalls unter Druck, um eine Klebverbindung zwischen den Substraten zu erhalten. Danach lässt man in Schritt c) die Mischung härten, gewöhnlich bei Raumtemperatur, um die Verklebung oder Verfugung der Substrate zu erreichen. Auf diese Weise werden die erfindungsgemäßen verklebten oder verfugten Substrate mit der gehärteten Mischung aus Komponente **A** und **B** als Kleb- oder Dichtmaterial erhalten.

Die zu verklebenden, beschichtenden oder verfugenden Substrate können aus dem gleichen oder aus einem verschiedenen Material sein. Es können alle üblichen Materialien mit der erfindungsgemäßen zweikomponentigen Zusammensetzung verklebt, abgedichtet, beschichtet oder verfugt werden. Bevorzugte Materialien zum Beschichten, Abdichten, Verkleben oder Verfugen sind Glas, Glaskeramik, Metalle, wie z.B. Aluminium, Kupfer, Stahl oder Edelstahl, Beton, Mörtel, Bausteine, wie z.B. Sandstein, Backstein, Ziegel, Keramik, Gips, Naturstein wie Granit oder Marmor und Kalksandstein, Asphalt, Bitumen, Kunststoffe, wie z.B. Polyolefine, PVC, Tedlar, PET, Polyamid, Polycarbonat, Polystyrol oder Poly(meth)acrylat, Polyester, Epoxydharz und Verbundwerkstoffe wie CFK, sowie bemalte oder lackierte Oberflächen.

Die erfindungsgemäßen ein- oder zweikomponentigen Siliconformulierungen, bevorzugt in Form eines RTV-Silicons, eignen sich insbesondere als elastische Kleb- oder Dichtstoffe, Beschichtungen oder Vergussmassen. Ein geeignetes Anwendungsgebiet ist z.B. das Kleben, Beschichten oder Dichten von Gegenständen aus Glas, Metall, z.B. Aluminium, Kupfer, oder Edelstahl, oder Kunststoff, z.B. PVC, Polyamid, Polycarbonat oder PET, sowie weiteren Materialien wie oben beschrieben. Die erfindungsgemäßen Siliconformulierungen werden besonders bevorzugt als Kleb- oder Dichtstoffe z.B. in den Bereichen Bau, beispielsweise Fenster- und Fassedanbau, Sanitär, Automobil, Solartechnik, Windkrafttechnik, weisse, braune oder rote Ware, Fassaden- und Fensterbau, Elektronik und Boots- und Schiffbau verwendet.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Siliconzusammensetzungen

Verwendete Rohstoffe (die in den Tabellen genannten Rohstoffe werden im Folgenden aufgeführt):
OH-terminiertes Polydimethylsiloxan (PDMS) der Viskosität 80 Pa·s und der mittleren Molmasse Mₙ 70'000 g/mol ("OH-PDMS 1", verwendet als Polymer **P2)** kann unter dem Handelsnamen Polymer FD 80 von der Firma Wacker bezogen werden. OH-terminiertes PDMS der mittleren Molmasse Mₙ 2'000 g/mol ("OH-PDMS 2", verwendet als Polymer **P1)** kann unter dem Handelsnamen Polymer X 345 von der Firma Wacker bezogen werden. Alkoxysilan-terminiertes Polydimethylsiloxan (PDMS) der Viskosität 80 Pa·s und der mittleren Molmasse Mₙ 70'000 g/mol ("OR-PDMS 3", verwendet als Polymer **P2)** kann unter dem Handelsnamen Polymer AL100 von der Firma Wacker bezogen werden. Alkoxysilan-terminiertes Polydimethylsiloxan (PDMS) der Viskosität 9 Pa·s und der mittleren Molmasse Mₙ 30'000 g/mol ("OR-PDMS 4", verwendet als Polymer **P1)** kann unter dem Handelsnamen Polymer AL08 von der Firma Wacker bezogen werden. OH-terminiertes Polydimethylsiloxan (PDMS) der Viskosität 120 Pa·s ("OH-PDMS 5", verwendet als Polymer **P2)** kann von der Firma Wacker bezogen werden. OH-terminiertes PDMS der Viskosität 6 Pa·s und der mittleren Molmasse Mₙ 31'000 g/mol ("OH-PDMS 6", verwendet als Polymer **P1)** kann von der Firma Wacker bezogen werden. (CH₃)₃Si-terminiertes PDMS der Viskosität 100 mPa·s ("PDMS oil") kann unter dem Handelsnamen Siliconöl AK 100 von der Firma Wacker bezogen werden. Vinyl-terminiertes PDMS ("Vinyl-PDMS") der Viskosität 20 Pa·s kann unter dem Handelsnamen Flexosil^{®} VinylFluid 20'000 von der Firma BRB bezogen werden. Gefällte Kreide ("PCC", Stearat-beschichtet und mit einer BET-Oberfläche von 20 m²/g) kann unter den Handelsnamen Winnofil^{®} oder Socal^{®} von der Firma Solvay bezogen werden. Natürliche gemahlene Kreide ("GCC") kann unter dem Handelsnamen Carbital^{®} von der Firma Imerys bezogen werden. Fällungskieselsäuren ("Silica 1", mit einer BET-Oberfläche von 90 m²/g) können unter dem Handelsnamen Sipernat^{®} von der Firma Evonik oder unter dem Handelsnamen Zeosil^{®} von der Firma Rhodia bezogen werden. Pyrogene Kieselsäuren ("Silica 2", mit einer BET-Oberfläche von 146 m²/g) können unter dem Handelsnamen Cabosil^{®} von der Firma Cabot oder unter dem Handelsnamen Aerosil^{®} von der Firma Evonik oder unter dem Handelsnamen HDK^{®} von der Firma Wacker bezogen werden. Silane und Siloxane können unter den Handelsnamen Dynasylan^{®} von der Firma Evonik oder unter dem Handelsnamen Geniosil^{®} von der Firma Wacker bezogen werden (z.B. Tetraethoxysilan "TEOS", Oligomere davon "TEOS-oligomer", Bis(triethoxysilan)-funktioneller Vernetzer nach Formel (III) "Alkoxysilan", Bis(trimethoxysilylpropyl)amin "Aminosilan 1" und 3-(2-Aminomethylamino)-propyltriethoxysilan "Aminosilan 2"). Zinnorganische Verbindungen ("Sn-Kat") können unter dem Handelsnamen TIB Kat^{®} von der Firma TIB bezogen werden.

Als Komponenten **A** der zweikomponentigen Siliconzusammensetzung wurden die in Tabellen 1 und 2 aufgeführten Bestandteile in den angegebenen Gewichtsteilen in einem Dissolver bei Raumtemperatur unter Inertatmosphäre miteinander vermischt und eingerührt, bis eine makroskopisch homogene Paste erhalten wurde.

Als Komponenten **B** der zweikomponentigen Siliconzusammensetzung wurden die in Tabellen 1 bis 4 aufgeführten Bestandteile in den angegebenen Gewichtsteilen in einem Dissolver bei Raumtemperatur unter Inertatmosphäre miteinander vermischt und eingerührt, bis eine makroskopisch homogene Paste erhalten wurde.

Die hergestellten Komponenten **A** und **B** der zweikomponentigen Siliconzusammensetzungen wurden getrennt in Kartuschen abgefüllt, luftdicht verschlossen gelagert und direkt vor der Applikation wie in Tabellen 1 bis 4angegeben im Gewichtsverhältnis **A:B** von 13:1 in einem Dissolver miteinander vermischt bis eine makroskopisch homogene Paste erhalten wurde.

Die hergestellte einkomponentige Siliconzusammensetzung B-12 wurde hergestellt, indem die in Tabelle 5 aufgeführten Bestandteile in den angegebenen Gewichtsteilen in einem Dissolver bei Raumtemperatur unter Inertatmosphäre miteinander vermischt und eingerührt wurde, bis eine makroskopisch homogene Paste erhalten wurde.

### Beschreibung der Prüfmethoden

Die Methode zur Bestimmung der **Bruchdehnung** sowie der **Zugfestigkeit** sowie die Herstellung der dazu benötigten Probekörper ist beschrieben in ISO 527. Gemessen wurde bei 23°C und 50% relativer Luftfeuchtigkeit an einem Prüfkörper Typ 1B (ISO 527-2) und mit einer Zuggeschwindigkeit von 200 mm/min.

Die Methode zur Bestimmung des **Weiterreisswiderstandes** (TPR) sowie die Herstellung der dazu benötigten Probekörper ist beschrieben in der DIN ISO 34-1. Gemessen wurde an Prüfkörpern vom Typ C.

Die **Mischviskosität** der nicht ausgehärteten zweikomponentigen Zusammensetzungen unmittelbar nach Mischen der Komponenten wurde auf einem thermostatisierten Kegel-Platten-Viskosimeter Physica UM (Kegeldurchmesser 20 mm, Kegelwinkel 1°, Kegelspitze-Platten-Abstand 0.05 mm) bei 23 °C und einer Scherrate von 0.89 s⁻¹ nach DIN EN ISO 3219 gemessen.

**Tabelle 1: Erfindungsgemässe (B-1, B-2) und Referenzzusammensetzungen (V-1, V-2) in Gewichtsprozent bezogen auf die gesamte Zusammensetzung (%) und bezogen auf die jeweilige Komponente (% (A) und % (B)) von zweikomponentigen Zusammensetzungen, sowie die jeweilig gemessenen Weiterreisswiderstände (TPR). Das Mischverhältnis von Komponente A zu Komponente B war in allen Fällen 13:1.**

| *Rohstoffe* | **B-1** | | **V-1** | | **B-2** | | **V-2** | |
|---|---|---|---|---|---|---|---|---|
| Komponente **A** | % **(A)** | % | % **(A)** | % | % **(A)** | % | % **(A)** | % |
| OH-PDMS 1 (P2) | 35 | 32.50 | 40 | 37.14 | 37.5 | 34.82 | 32 | 29.71 |
| OH-PDMS 2 (P1) | 5 | 4.64 | - | - | 2.5 | 2.32 | 30 | 27.86 |
| PDMS oil | 25 | 23.21 | 25 | 23.21 | 25 | 23.21 | 21 | 19.5 |
| PCC | 35 | 32.50 | 35 | 32.50 | 20 | 18.57 | 9 | 8.36 |
| Silica 1 | - | - | - | - | 15 | 13.93 | 8 | 7.43 |
| *Total (A)* | 100 | 92.85 | 100 | 92.85 | 100 | 92.85 | 100 | 92.85 |
| P1:P2 (mol/mol) | 5 | | 0 | | 2.3 | | 32.8 | |

| Komponente **B** | % **(B)** | % | % **(B)** | % | % **(B)** | % | % **(B)** | % |
|---|---|---|---|---|---|---|---|---|
| Vinyl-PDMS | 43.5 | 3.11 | 43.5 | 3.11 | 43.5 | 3.11 | 44 | 3.14 |
| TEOS | 10.5 | 0.75 | 10.5 | 0.75 | 10.5 | 0.75 | 35 | 2.50 |
| TEOS-oligomer | - | - | - | - | - | - | 6 | 0.43 |
| Alkoxysilan | 20.5 | 1.46 | 20.5 | 1.46 | 20.5 | 1.46 | - | - |
| Aminosilan 1 | 5 | 0.36 | 5 | 0.36 | 5 | 0.36 | - | - |
| Aminosilan 2 | 5 | 0.36 | 5 | 0.36 | 5 | 0.36 | - | - |
| Silica 2 | 14.5 | 1.04 | 14.5 | 1.04 | 14.5 | 1.04 | 5 | 0.36 |
| Sn-Kat | 1 | 0.07 | 1 | 0.07 | 1 | 0.07 | 10 | 0.71 |
| *Total (B)* | 100 | 7.15 | 100 | 7.15 | 100 | 7.15 | 100 | 7.15 |
| TPR [N/mm] | 4 | | 2.1 | | 6 | | 0.5 | |

**Tabelle 2: Erfindungsgemässe (B-3 und B-5) Zusammensetzungen und Referenzzusammensetzung (B-4) in Gewichtsprozent bezogen auf die gesamte Zusammensetzung (%) und bezogen auf die jeweilige Komponente (% (A) und % (B)) von zweikomponentigen Zusammensetzungen, sowie die jeweilig gemessenen Weiterreisswiderstände (TPR). Das Mischverhältnis von Komponente A zu Komponente B war in allen Fällen 13:1.**

| *Rohstoffe* | **B-3** | | **B-4** | | **B-5** | |
|---|---|---|---|---|---|---|
| Komponente **A** | % **(A)** | % | % **(A)** | % | % **(A)** | % |
| OH-PDMS 1 (P2) | 31 | 28.79 | 32.5 | 30.18 | 41.2 | 38.26 |
| OH-PDMS 2 (P1) | 2 | 1.86 | 7.5 | 6.96 | 5.9 | 5.48 |
| PDMS oil | 38.4 | 35.66 | 25 | 23.21 | 29.4 | 27.30 |
| PCC | 15.2 | 14.11 | 20 | 18.57 | - | - |
| Silica 1 | 13.4 | 12.44 | 15 | 13.93 | 23.5 | 21.82 |
| *Total (A)* | 100 | 92.85 | 100 | 92.85 | 100 | 92.85 |
| P1:P2 (mol/mol) | 2.3 | | 8.1 | | 5 | |

| Komponente **B** | % **(B)** | % | % **(B)** | % | % **(B)** | % |
|---|---|---|---|---|---|---|
| Vinyl-PDMS | 44 | 3.14 | 43.5 | 3.11 | 43.5 | 3.11 |
| TEOS | 35 | 2.50 | 10.5 | 0.75 | 10.5 | 0.75 |
| TEOS-oligomer | 6 | 0.43 | - | - | - | - |
| Alkoxysilan | - | - | 20.5 | 1.46 | 20.5 | 1.46 |
| Aminosilan 1 | - | - | 5 | 0.36 | 5 | 0.36 |
| Aminosilan 2 | - | - | 5 | 0.36 | 5 | 0.36 |
| Silica 2 | 5 | 0.36 | 14.5 | 1.04 | 14.5 | 1.04 |
| Sn-Kat | 10 | 0.71 | 1 | 0.07 | 1 | 0.07 |
| *Total (B)* | 100 | 7.15 | 100 | 7.15 | 100 | 7.15 |
| TPR [N/mm] | 5.9 | | 3.2 | | 3.5 | |

**Tabelle 3: Nicht erfindungsgemässe (B-6 bis B-8) Zusammensetzungen in Gewichtsprozent bezogen auf die gesamte Zusammensetzung (%) und bezogen auf die jeweilige Komponente (% (A) und % (B)) von zweikomponentigen Zusammensetzungen, sowie die jeweilig gemessenen Weiterreisswiderstände (TPR). Das Mischverhältnis von Komponente A zu Komponente B war in allen Fällen 13:1.**

| *Rohstoffe* | **B-6** | | **B-7** | | **B-8** | |
|---|---|---|---|---|---|---|
| Komponente **A** | % **(A)** | % | % **(A)** | % | % **(A)** | % |
| OH-PDMS 2 (P2) | - | - | - | - | 35 | 32.50 |
| OH-PDMS 5 (P2) | 35 | 32.50 | 35 | 32.50 | - | - |
| OH-PDMS 6 (P1) | 5 | 4.64 | 5 | 4.64 | 5 | 4.64 |
| PDMS oil | 25 | 23.21 | 25 | 23.21 | 25 | 23.21 |
| PCC | 35 | 32.50 | 35 | 32.50 | 35 | 32.50 |
| *Total (A)* | 100 | 92.86 | 100 | 92.86 | 100 | 92.86 |
| P1:P2 (mol/mol) | 0.37 | | 0.37 | | 0.32 | |

| Komponente B | % **(B)** | % | % **(B)** | % | % (B) | % |
|---|---|---|---|---|---|---|
| Vinyl-PDMS | 44.63 | 3.19 | 43.47 | 3.11 | 44.63 | 3.19 |
| TEOS | - | - | 10.26 | 0.73 | - | - |
| Alkoxysilan | 28.94 | 2.07 | 20.51 | 1.47 | 28.94 | 2.07 |
| Aminosilan 1 | 5.27 | 0.38 | 5.14 | 0.37 | 5.27 | 0.38 |
| Aminosilan 2 | 5.26 | 0.38 | 5.13 | 0.37 | 5.26 | 0.38 |
| Silica 2 | 14.85 | 1.06 | 14.46 | 1.03 | 14.85 | 1.06 |
| Sn-Kat | 1.05 | 0.08 | 1.03 | 0.07 | 1.05 | 0.08 |
| *Total (B)* | 100 | 7.14 | 100 | 7.14 | 100 | 7.14 |
| TPR [N/mm] | 2.4 | | 2.4 | | 2.3 | |

**Tabelle 4: Erfindungsgemässe (B-10 und B-11) Zusammensetzungen und Vergleichbeispiel (B-9) in Gewichtsprozent bezogen auf die gesamte Zusammensetzung (%) und bezogen auf die jeweilige Komponente (% (A) und % (B)) von zweikomponentigen Zusammensetzungen, sowie die jeweilig gemessenen Weiterreisswiderstände (TPR). Das Mischverhältnis von Komponente A zu Komponente B war in allen Fällen 13:1.**

| *Rohstoffe* | **B-9** | | **B-10** | | **B-11** | |
|---|---|---|---|---|---|---|
| Komponente **A** | % **(A)** | % | % **(A)** | % | % **(A)** | % |
| OH-PDMS 2 (P2) | 35 | 32.50 | 35 | 32.50 | 35 | 32.50 |
| OH-PDMS 1 (P1) | - | - | 5 | 4.64 | 5 | 4.64 |
| OH-PDMS 6 (P1) | 5 | 4.64 | - | - | - | - |
| PDMS oil | 25 | 23.21 | 25 | 23.21 | 25 | 23.21 |
| PCC | 35 | 32.50 | 35 | 32.50 | 35 | 32.50 |
| *Total (A)* | 100 | 92.86 | 100 | 92.86 | 100 | 92.86 |
| P1:P2 (mol/mol) | 0.32 | | 5 | | 5 | |

| Komponente **B** | % **(B)** | % | % **(B)** | % | % **(B)** | % |
|---|---|---|---|---|---|---|
| Vinyl-PDMS | 43.47 | 3.11 | 43.47 | 3.11 | 44.63 | 3.19 |
| TEOS | 10.26 | 0.73 | 10.26 | 0.73 | - | - |
| Alkoxysilan | 20.51 | 1.47 | 20.51 | 1.47 | 28.94 | 2.07 |
| Aminosilan 1 | 5.14 | 0.37 | 5.14 | 0.37 | 5.27 | 0.38 |
| Aminosilan 2 | 5.13 | 0.37 | 5.13 | 0.37 | 5.26 | 0.38 |
| Silica 2 | 14.46 | 1.03 | 14.46 | 1.03 | 14.85 | 1.06 |
| Sn-Kat | 1.03 | 0.07 | 1.03 | 0.07 | 1.05 | 0.08 |
| *Total (B)* | 100 | 7.14 | 100 | 7.14 | 100 | 7.14 |
| TPR [N/mm] | 2.3 | | 10.8 | | 10.4 | |

**Tabelle 5: Nicht erfindungsgemässe (B-12) Zusammensetzung in Gewichtsprozent bezogen auf die gesamte Zusammensetzung (%) einer einkomponentigen Zusammensetzung, sowie der gemessene Weiterreisswiderstand (TPR).**

| *Rohstoffe* | **B-12** |
|---|---|
| OR-PDMS 3 (P2) | 35.80 |
| OR-PDMS 4 (P1) | 3.58 |
| PDMS oil | 10.74 |
| Methyltrimethoxysilan | 0.5 |
| 3-Aminopropyltrimethoxysilan | 0.97 |
| GCC | 44.75 |
| Silica 2 | 3.58 |
| Sn Kat | 0.09 |
| *Total* | 100 |
| P1:P2 (mol/mol) | 0.23 |
| TPR [N/mm] | 3.6 |

Im Folgenden (Tabelle 6) werden die Mischviskositäten einer handelsüblichen, nicht erfindungsgemässen zweikomponentigen (2K) Siliconzusammensetzung (Sikasil^{®} SG-550, erhältlich von Sika Schweiz) mit der erfindungsgemässen Zusammensetzung B-2 (als industrieller Upscale-Versuch) verglichen. Dazu wird noch die Austragsmenge der 2K Pumpanlage bei 200 bar Druck angegeben, um die Pumpbarkeit zu vergleichen.

**Tabelle 6: Mischviskosität, TPR und Austragsmenge von einer erfindungsgemässen (B-2) Zusammensetzung und einer kommerziell erhältlichen Referenzzusammensetzung.**

| *Zusammensetzung* | Weiterreisswiderstand (TPR) [N/mm] | Mischviskosität (Komponenten A+B) [mPa s] | Austragsmenge 2K Pumpanlage bei 200 bar [g/min] |
|---|---|---|---|
| B-2 (Upscale) | 5.07 | 2015 | 800 |
| Sikasil^{®} SG-550 (Referenz) | 3.293378300 | | |

## Patentansprüche

1. Siliconzusammensetzung umfassend
- mindestens zwei reaktive Polydiorganosiloxanpolymere **P1** und **P2** der Formel (I), die zusammen 20 bis 60 Gew.-%, bezogen auf die gesamte Siliconzusammensetzung, ausmachen, 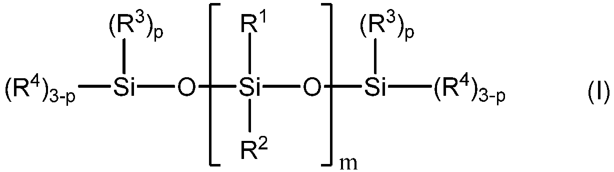
wobei die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
der Index p für einen Wert von 0, 1 oder 2 steht,
- mindestens einen Vernetzer **V** für Polydiorganosiloxane, mit einem Anteil von 0.5 bis 5 Gew.-%, bezogen auf die gesamte Siliconzusammensetzung,
- mindestens einen Katalysator **K,** mit einem Anteil von 0.001 bis 0.1 Gew.-%, bezogen auf die gesamte Siliconzusammensetzung,
- mindestens einen optional hydrophobierten Füllstoff **F,** ausgewählt aus der Gruppe umfassend gefällte oder pyrogene Kieselsäure und gemahlene oder gefällte Kreide, mit einem Anteil von 10 bis 70 Gew.-%, bezogen auf die gesamte Siliconzusammensetzung,
**dadurch gekennzeichnet, dass** das reaktive Polyorganosiloxanpolymer **P1** eine höhere Reaktivität in der Kondensationsvernetzung mit Vernetzer **V** aufweist als das reaktive Polyorganosiloxanpolymer **P2** und das Molverhältnis **P1** : **P2** in der Zusammensetzung zwischen 1 und 5 liegt und dass das reaktive Polydiorganoxanpolymer **P1** ein mittleres Molekulargewicht Mₙ von zwischen 500 und 3000 g/mol aufweist und das reaktive Polydiorganosiloxanpolymer **P2** ein mittleres Molekulargewicht Mₙ von zwischen 50'000 und 250'000 g/mol aufweist, bestimmt mittels GPC gegen PDMS als Standard.

2. Siliconzusammensetzung gemäss Anspruch 1, **dadurch gekennzeichnet, dass** die Reste R¹ und R² für Methylgruppen stehen und die Reste R³ unabhängig voneinander für Phenyl-, Vinyl- oder für Methylgruppen stehen.

3. Siliconzusammensetzung gemäss einem der Ansprüche 1 oder 2, **dadurch gekennzeichnet, dass** das reaktive Polydiorganosiloxanpolymer **P1** andere reaktive Silanfunktionen, insbesondere Trialkoxysilanfunktionen mit sterisch weniger anspruchsvollen Alkoxygruppen, als das reaktive Polydiorganosiloxanpolymer **P2** aufweist.

4. Siliconzusammensetzung gemäss einem der vorhergehenden Ansprüche, **dadurch gekennzeichnet, dass** der Füllstoff **F** zwei Füllstoffe **F1** und **F2** umfasst, wobei der eine Füllstoff **F1** eine BET-Oberfläche von zwischen 5 und 50 m²/g aufweist und der andere Füllstoff **F2** eine BET-Oberfläche von zwischen 50 und 300 m²/g aufweist, gemessen nach ISO5794, Annex D.

5. Siliconzusammensetzung gemäss einem der vorhergehenden Ansprüche, **dadurch gekennzeichnet, dass** der Katalysator **K** mindestens einen Komplex eines Elements ausgewählt aus den Gruppen 1, 4, 8, 9, 10, 12, 13, 14, und 15 des Periodensystems umfasst, insbesondere einen Zinn- oder Titankomplex oder eine Mischung davon.

6. Siliconzusammensetzung gemäss einem der vorhergehenden Ansprüche, **dadurch gekennzeichnet, dass** der Vernetzer **V** zwei oder mehr Organosilane und/oder deren Hydrolysate und/oder Kondensate umfasst.

7. Siliconzusammensetzung gemäss einem der Ansprüche 1 bis 6, **dadurch gekennzeichnet, dass** die Zusammensetzung eine einkomponentige Siliconzusammensetzung ist.

8. Siliconzusammensetzung gemäss einem der Ansprüche 1 bis 6, **dadurch gekennzeichnet, dass** die Zusammensetzung eine zweikomponentige Siliconzusammensetzung ist bestehend aus einer Komponente **A** umfassend
- die mindestens zwei reaktiven Polydiorganosiloxanpolymere **P1** und **P2,** die zusammen 20 bis 60 Gew.-%, bezogen auf die gesamte Siliconzusammensetzung, ausmachen,
- den mindestens einen optional hydrophobierten Füllstoff **F,** ausgewählt aus der Gruppe umfassend gefällte oder pyrogene Kieselsäure und gemahlene oder gefällte Kreide, mit einem Anteil von 10 bis 70 Gew.-%, bezogen auf die gesamte Siliconzusammensetzung;
und einer Komponente **B** umfassend
- den mindestens einen Vernetzer **V** für Polydiorganosiloxane, mit einem Anteil von 0.5 bis 5 Gew.-%, bezogen auf die gesamte Siliconzusammensetzung,
- den mindestens einen Katalysator **K,** mit einem Anteil von 0.001 bis 0.1 Gew.-%, bezogen auf die gesamte Siliconzusammensetzung.

9. Siliconzusammensetzung gemäss Anspruch 8, **dadurch gekennzeichnet, dass** das Gewichtsverhältnis von Komponente **A** zu Komponente **B** ≥ 1:1, insbesondere von 3:1 bis 15:1, bevorzugt von 7:1 bis 13:1, beträgt.

10. Verwendung zweier reaktiver Polydiorganoxiloxanpolymere **P1** und **P2,** wobei das reaktive Polyorganosiloxanpolymer **P1** eine höhere Reaktivität in der Kondensationsvernetzung mit einem Vernetzer **V** für Polydiorganoxiloxane aufweist als das reaktive Polyorganosiloxanpolymer **P2** und das Molverhältnis **P1** : **P2** in der Zusammensetzung zwischen 1 und 5 liegt und das reaktive Polydiorganoxanpolymer **P1** ein mittleres Molekulargewicht Mₙ von zwischen 500 und 3000 g/mol aufweist und das reaktive Polydiorganosiloxanpolymer **P2** ein mittleres Molekulargewicht Mn von zwischen 50'000 und 250'000 g/mol aufweist, bestimmt mittels GPC gegen PDMS als Standard, zusammen mit mindestens einem Füllstoff F, ausgewählt aus der Gruppe umfassend gefällte oder pyrogene Kieselsäure und gemahlene oder gefällte Kreide, mit mindestens einem Vernetzer **V,** sowie zusammen mit einem Katalysator **K** zur Erhöhung des Weiterreisswiderstands von Siliconzusammensetzungen.

11. Verwendung gemäss Anspruch 10, **dadurch gekennzeichnet, dass** der Füllstoff **F** eine Füllstoffkombination aus **F1** und **F2** darstellt, umfassend als **F2** mindestens eine Kieselsäure mit einer BET-Oberfläche von 50 bis 300 m²/g sowie als **F1** mindestens eine Kreide mit einer BET-Oberfläche von 10 bis 25 m²/g , gemessen nach ISO5794, Annex D, und bevorzugt einer mittleren Teilchengrösse d50 von 10 bis 1000 nm, gemessen durch die in der Beschreibung offenbarte Methode.

12. Verwendung einer Siliconzusammensetzung gemäss einem der Ansprüche 1 bis 9 als Klebstoff, Dichtstoff, Beschichtung oder Gussmasse.

13. Gehärtete Siliconzusammensetzung erhältlich aus einer einkomponentigen Siliconzusammensetzung gemäss Anspruch 7, insbesondere durch Reaktion mit Feuchtigkeit, oder
aus einer zweikomponentigen Siliconzusammensetzung gemäss Anspruch 8 oder 9 durch Mischen der Komponente **A** mit der Komponente **B.**

14. Bauwerk oder Fabrikationsartikel, der mit einer Siliconzusammensetzung gemäss einem der Ansprüche 1 bis 9 verklebt, abgedichtet, ausgegossen oder beschichtet wurde.

## Claims

1. Silicone composition comprising
- at least two reactive polydiorganosiloxane polymers **P1** and **P2** of the formula (I) that together account for 20% to 60% by weight based on the overall silicone composition, 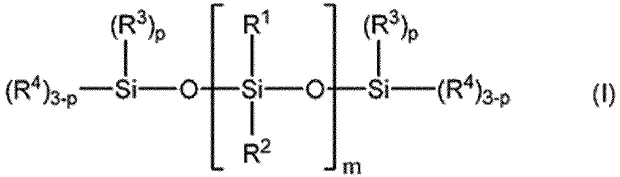
where the radicals R¹, R² and R³ are independently linear or branched, monovalent hydrocarbyl radicals which have 1 to 12 carbon atoms and optionally include one or more heteroatoms, and optionally one or more C-C multiple bonds and/or optionally cycloaliphatic and/or aromatic components;
the radicals R⁴ are independently hydroxyl groups or alkoxy, acetoxy or ketoxime groups which each have 1 to 13 carbon atoms and optionally include one or more heteroatoms, and optionally one or more C-C multiple bonds and/or optionally cycloaliphatic and/or aromatic components; the index p has a value of 0, 1 or 2,
- at least one crosslinker **V** for polydiorganosiloxanes, with a proportion of 0.5% to 5% by weight based on the overall silicone composition,
- at least one catalyst **K,** with a proportion of 0.001% to 0.1% by weight based on the overall silicone composition,
- at least one optionally hydrophobized filler **F,** selected from the group comprising precipitated or fumed silica and ground or precipitated chalk, with a proportion of 10% to 70% by weight based on the overall silicone composition,
**characterized in that**
the reactive polyorganosiloxane polymer **P1** has a higher reactivity in the condensation crosslinking with crosslinker **V** than the reactive polyorganosiloxane polymer **P2** and the molar ratio **P1:P2** in the composition is between 1 and 5 and that the reactive polydiorganosiloxane polymer **P1** has an average molecular weight Mₙ of between 500 and 3000 g/mol and the reactive polydiorganosiloxane polymer **P2** has an average molecular weight Mₙ of between 50 000 and 250 000 g/mol, determined by GPC against PDMS as standard.

2. Silicone composition according to Claim 1, **characterized in that** the radicals R¹ and R² are methyl groups and the radicals R³ are independently phenyl, vinyl or methyl groups.

3. Silicone composition according to either of Claims 1 and 2, **characterized in that** the reactive polydiorganosiloxane polymer **P1** has different reactive silane functions, especially trialkoxysilane functions with less sterically demanding alkoxy groups than the reactive polydiorganosiloxane polymer **P2.**

4. Silicone composition according to any of the preceding claims, **characterized in that** the filler **F** comprises two fillers **F1** and **F2,** where one filler **F1** has a BET surface area of between 5 and 50 m²/g and the other filler **F2** has a BET surface area of between 50 and 300 m²/g, measured in accordance with IS05794, Annex D.

5. Silicone composition according to any of the preceding claims, **characterized in that** the catalyst **K** comprises at least one complex of an element selected from groups 1, 4, 8, 9, 10, 12, 13, 14 and 15 of the periodic table, especially a tin complex or titanium complex or a mixture thereof.

6. Silicone composition according to any of the preceding claims, **characterized in that** the crosslinker **V** comprises two or more organosilanes and/or hydrolysates and/or condensates thereof.

7. Silicone composition according to any of Claims 1 to 6, **characterized in that** the composition is a one-component silicone composition.

8. Silicone composition according to any of Claims 1 to 6, **characterized in that** the composition is a two-component silicone composition consisting of a component **A** comprising
- the at least two reactive polydiorganosiloxane polymers **P1** and **P2** that together account for 20% to 60% by weight based on the overall silicone composition,
- the at least one optionally hydrophobized filler **F,** selected from the group comprising precipitated or fumed silica and ground or precipitated chalk, with a proportion of 10% to 70% by weight based on the overall silicone composition;
and a component **B** comprising
- the at least one crosslinker **V** for polydiorganosiloxanes, with a proportion of 0.5% to 5% by weight based on the overall silicone composition,
- the at least one catalyst **K,** with a proportion of 0.001% to 0.1% by weight based on the overall silicone composition.

9. Silicone composition according to Claim 8, **characterized in that** the weight ratio of component **A** to component **B** is ≥ 1:1, especially from 3:1 to 15:1, preferably from 7:1 to 13:1.

10. Use of two reactive polydiorganosiloxane polymers **P1** and **P2,** where the reactive polyorganosiloxane polymer **P1** has a higher reactivity in the condensation crosslinking with a crosslinker **V** for polydiorganosiloxanes than the reactive polyorganosiloxane polymer **P2** and the molar ratio **P1:P2** in the composition is between 1 and 5 and the reactive polydiorganosiloxane polymer **P1** has an average molecular weight Mₙ of between 500 and 3000 g/mol and the reactive polydiorganosiloxane polymer **P2** has an average molecular weight Mₙ of between 50 000 and 250 000 g/mol, determined by GPC against PDMS as standard, together with at least one filler **F** selected from the group comprising precipitated or fumed silica and ground or precipitated chalk, with at least one crosslinker **V,** and together with a catalyst **K** for increasing the tear propagation resistance of silicone compositions.

11. Use according to Claim 10, **characterized in that** the filler **F** is a filler combination of **F1** and **F2,** comprising, as **F2,** at least one silica having a BET surface area of 50 to 300 m²/g and, as **F1**, at least one chalk having a BET surface area of 10 to 25 m²/g, measured in accordance with IS05794, Annex D, and preferably an average particle size d50 of 10 to 1000 nm, measured by the method disclosed in the description.

12. Use of a silicone composition according to any of Claims 1 to 9 as adhesive, sealant, coating or casting compound.

13. Cured silicone composition obtainable from a one-component silicone composition according to Claim 7, especially by reaction with moisture, or
from a two-component silicone composition according to Claim 8 or 9 by mixing component **A** with component **B.**

14. Built construction or fabricated article that has been bonded, sealed, cast or coated with a silicone composition according to any of Claims 1 to 9.

## Revendications

1. Composition de silicone, comprenant
- au moins deux polymères réactifs de polydiorganosiloxane P1 et P2 de formule (I), qui représentent ensemble 20 à 60% en poids par rapport à la composition totale de silicone, 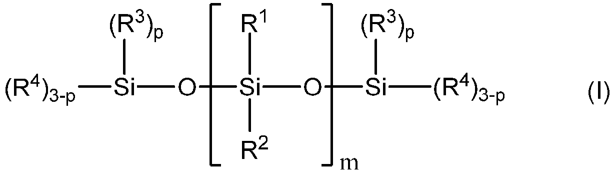
les radicaux R¹, R² et R³ représentant, indépendamment les uns des autres, des radicaux hydrocarbonés linéaires ou ramifiés, monovalents, comprenant 1 à 12 atomes de carbone, qui présentent le cas échéant un ou plusieurs hétéroatomes et le cas échéant une ou plusieurs liaisons multiples C-C et/ou le cas échéant des parties cycloaliphatiques et/ou aromatiques ;
les radicaux R⁴ représentent, indépendamment les uns des autres, des groupes hydroxyle ou des groupes alcoxy, acétoxy ou cétoxime, comprenant à chaque fois 1 à 13 atomes de carbone, qui présentent le cas échéant un ou plusieurs hétéroatomes, le cas échéant une ou plusieurs liaisons multiples C-C et/ou le cas échéant des parties cycloaliphatiques et/ou aromatiques ;
l'indice p représente une valeur de 0, 1 ou 2,
- au moins un réticulant V pour les polydiorganosiloxanes, en une proportion de 0,5 à 5% en poids, par rapport à la composition totale de silicone,
- au moins un catalyseur K, en une proportion de 0,001 à 0,1% en poids, par rapport à la composition totale de silicone,
- au moins une charge éventuellement hydrofugée F, choisie dans le groupe comprenant la silice précipitée ou pyrogène et la craie broyée ou précipitée, en une proportion de 10 à 70% en poids, par rapport à la composition totale de silicone,
**caractérisée en ce que** le polymère réactif de polyorganosiloxane P1 présente une réactivité plus élevée dans la réticulation par condensation avec le réticulant V que le polymère réactif de polyorganosiloxane P2 et le rapport molaire P1:P2 dans la composition se situe entre 1 et 5 et **en ce que** le polymère réactif de polydiorganosiloxane P1 présente un poids moléculaire moyen Mₙ entre 500 et 3000 g/mole et le polymère réactif de polydiorganosiloxane P2 présente un poids moléculaire moyen Mₙ entre 50.000 et 250.000 g/mole, déterminés par CPG par rapport au PDMS comme référence.

2. Composition de silicone selon la revendication 1, **caractérisée en ce que** les radicaux R¹ et R² représentent des groupes méthyle et les radicaux R³ représentent, indépendamment les uns des autres, des groupes phényle, vinyle ou méthyle.

3. Composition de silicone selon l'une quelconque des revendications 1 ou 2, **caractérisée en ce que** le polymère réactif de polydiorganosiloxane P1 présente d'autres fonctions silane réactives, en particulier des fonctions trialcoxysilane présentant des groupes alcoxy stériquement moins encombrants que le polymère réactif de polydiorganosiloxane P2.

4. Composition de silicone selon l'une quelconque des revendications précédentes, **caractérisée en ce que** la charge F comprend deux charges F1 et F2, ladite une charge F1 présentant une surface BET entre 5 et 50 m²/g et ladite autre charge F2 présentant une surface BET entre 50 et 300 m²/g, mesurées selon la norme ISO5794, annexe D.

5. Composition de silicone selon l'une quelconque des revendications précédentes, **caractérisée en ce que** le catalyseur K comprend au moins un complexe d'un élément choisi dans les groupes 1, 4, 8, 9, 10, 12, 13, 14, et 15 du système périodique des éléments, en particulier un complexe d'étain ou de titane ou un mélange de ceux-ci.

6. Composition de silicone selon l'une quelconque des revendications précédentes, **caractérisée en ce que** le réticulant V comprend deux organosilanes ou plus et/ou leurs hydrolysats et/ou produits de condensation.

7. Composition de silicone selon l'une quelconque des revendications 1 à 6, **caractérisée en ce que** la composition est une composition de silicone à un composant.

8. Composition de silicone selon l'une quelconque des revendications 1 à 6, **caractérisée en ce que** la composition est une composition de silicone à deux composants, constituée par un composant A comprenant
- lesdits au moins deux polymères réactifs de polydiorganosiloxane P1 et P2, qui représentent ensemble 20 à 60% en poids par rapport à la composition totale de silicone,
- ladite au moins une charge éventuellement hydrofugée F, choisie dans le groupe comprenant la silice précipitée ou pyrogène et la craie broyée ou précipitée, en une proportion de 10 à 70% en poids, par rapport à la composition totale de silicone ;
et un composant B comprenant
- ledit au moins un réticulant V pour les polydiorganosiloxanes, en une proportion de 0,5 à 5% en poids, par rapport à la composition totale de silicone,
- ledit au moins un catalyseur K, en une proportion de 0,001 à 0,1% en poids, par rapport à la composition totale de silicone.

9. Composition de silicone selon la revendication 8, **caractérisée en ce que** le rapport pondéral du composant A au composant B est ≥ 1:1, en particulier de 3:1 à 15:1, de préférence de 7:1 à 13:1.

10. Utilisation de deux polymères réactifs de polydiorganosiloxane P1 et P2, le polymère réactif de polyorganosiloxane P1 présentant une réactivité plus élevée dans la réticulation par condensation avec un réticulant V pour les polydiorganosiloxanes que le polymère réactif de polyorganosiloxane P2 et le rapport molaire P1:P2 dans la composition se situant entre 1 et 5 et le polymère réactif de polydiorganosiloxane P1 présentant un poids moléculaire moyen Mₙ entre 500 et 3000 g/mole et le polymère réactif de polydiorganosiloxane P2 présentant un poids moléculaire moyen Mₙ entre 50.000 et 250.000 g/mole, déterminés par CPG par rapport au PDMS comme référence, conjointement avec au moins une charge F, choisie dans le groupe comprenant la silice précipitée ou pyrogène et la craie broyée ou précipitée, avec au moins un réticulant V ainsi que conjointement avec un catalyseur K pour augmenter la résistance à la propagation d'une déchirure de compositions de silicone.

11. Utilisation selon la revendication 10, **caractérisée en ce que** la charge F représente une combinaison de charges de F1 et F2, comprenant, comme F2, au moins une silice présentant une surface BET de 50 à 300 m²/g ainsi que, comme F1, au moins une craie présentant une surface BET de 10 à 25 m²/g mesurées selon la norme ISO5794, annexe D, et présentant de préférence une grosseur moyenne de particule d50 de 10 à 1000 nm, mesurée par la méthode décrite dans la description.

12. Utilisation d'une composition de silicone selon l'une quelconque des revendications 1 à 9 comme adhésif, masse d'étanchéité, revêtement ou masse de moulage.

13. Composition durcie de silicone pouvant être obtenue à partir d'une composition de silicone à un composant selon la revendication 7, en particulier par réaction avec de l'humidité, ou à partir d'une composition de silicone à deux composants selon la revendication 8 ou 9 par mélange du composant A avec le composant B.

14. Construction ou article de fabrication qui a été collé(e), bouché(e), moulé(e) ou revêtu(e) par une composition de silicone selon l'une quelconque des revendications 1 à 9.
